# EUROPEAN PATENT SPECIFICATION

(11) **EP 1 149 625 B1**
(45) Date of publication and mention of the grant of the patent: **06.12.2006**
(21) Application number: 00303490.7
(22) Date of filing: 26.04.2000
(51) Int. Cl.: B01D 71/68, B01D 67/00, B01D 69/02

(54) **Internal hydrophilic membranes from blended anionic copolymers**
Vollständig hydrophile Membranen aus anionischen Copolymer-Gemischen
Membranes totalement hydrophiles à partir de mélanges de copolymères anioniques

(43) Date of publication of application: 31.10.2001
(73) Proprietor: PALL CORPORATION, East Hills, NY 11548-1209 (US)
(72) Inventor: Wang, I-fan, San Diego, California 92128 (US); Morris, Richard A., Longwood, FL 32779 (US); McDonogh, Richard, San Diego, CA 92130 (US)
(74) Representative: Smaggasgale, Gillian Helen

(56) References cited:
- US-A- 4 207 182
- US-A- 4 976 859
- US-A- 5 188 734
- US-A- 5 246 582
- US-A- 5 693 740
- T. KNOELL: "Biofouling potentials of microporous membranes containing a sulfonated polyether-ethersulfone/polyethersulfone block copolymer" JORNAL OF MEMBRANE SCIENCE, vol. 157, no. 1, 1999, pages 117-138, XP002148291 Amsterdam, NL
- PATENT ABSTRACTS OF JAPAN vol. 011, no. 242 (C-438), 7 August 1987 (1987-08-07) & JP 62 049912 A (FUJI PHOTO FILM CO LTD), 4 March 1987 (1987-03-04) -& DATABASE WPI Derwent Publications Ltd., London, GB; AN 1987-103990 XP002148297 -& DATABASE CHEMABS [Online] retrieved from STN Database accession no. 107:135528 CA XP002148292
- DATABASE WPI Section Ch, Week 199333 Derwent Publications Ltd., London, GB; Class A88, AN 1993-262809 XP002148298 -& RO 104 656 B (INTRE ELECTROBANAT), 28 November 1994 (1994-11-28)
- PATENT ABSTRACTS OF JAPAN vol. 017, no. 259 (C-1061), 21 May 1993 (1993-05-21) -& JP 05 004031 A (NIPPON STEEL CORP), 14 January 1993 (1993-01-14) -& DATABASE WPI Derwent Publications Ltd., London, GB; AN 1993-054876 XP002148299 -& DATABASE CHEMABS [Online] retrieved from STN Database accession no. 119:74243 CA XP002148293
- POZNIAK G ET AL: "SULFONATED POLYSULFONE MEMBRANES WITH ANTIFOULING ACTIVITY" ANGEWANDTE MAKROMOLEKULARE CHEMIE. APPLIED MACROMOLECULAR CHEMISTRY AND PHYSICS,DE,WILEY VCH,WEINHEIM, vol. 233, 1 November 1995 (1995-11-01), pages 23-31, XP000551069 ISSN: 0003-3146
- DATABASE CHEMABS [Online] CHEMICAL ABSTRACTS SERVICE, COLUMBUS, OHIO, US; XU, SHUGUANG ET AL: "Study on polysulfone - sulfonated polysulfone blend ultrafiltration membrane" retrieved from STN Database accession no. 122:11629 CA XP002148294 & HUANJING HUAXUE (1993), 12(6), 468-72 , 1993,
- PATENT ABSTRACTS OF JAPAN vol. 011, no. 101 (C-413), 31 March 1987 (1987-03-31) -& JP 61 249504 A (NOK CORP), 6 November 1986 (1986-11-06) -& DATABASE WPI Derwent Publications Ltd., London, GB; AN 1986-334900 XP002148300 -& DATABASE CHEMABS [Online] retrieved from STN Database accession no. 106:69284 CA XP002148295
- DATABASE WPI Section Ch, Week 198139 Derwent Publications Ltd., London, GB; Class A88, AN 1981-71760D XP002148301 & ZA 8 003 750 A (INDIA COUNCIL SCI & IND) , 11 May 1981 (1981-05-11) -& DATABASE CHEMABS [Online] retrieved from STN Database accession no. 95:205149 CA XP002148296

## Description

### BACKGROUND OF THE INVENTION

### 1. Field of the Invention

The present invention relates to hydrophilic membranes containing blends of polyethersulfone and sulfonated polymers or copolymers. In particular, the invention relates to hydrophilic membranes wherein the sulfonated polymers or copolymers are sulfonated before being blended with the polyethersulfone.

### 2. Background of the Invention

Filtration membranes are useful for numerous applications where it is desirable to purify or separate components of gaseous or liquid mixtures. Some applications include, for example, reverse osmosis, computer chip manufacturing, medical applications, and beverage processing. Because the applications for membranes are diverse and numerous, so too are the structures of the membranes and the materials from which they are made.

Membranes can be classified in various ways. One classification scheme lists types of membranes functionally in increasing order of their size selectivity: gas separation (GS), reverse osmosis (RO), ultrafiltration (UF), and microfiltration (MF).

Membranes can also be classified by their cross-sectional symmetry or asymmetry. A membrane that is symmetric, or isotropic, has relatively constant pore sizes throughout its thickness, while an asymmetric membrane has variable pore sizes, usually having relatively larger pores on one side of the membrane and relatively smaller pores on the opposite side of the membrane. Advances in membrane technology have led to membranes having high degrees of cross-sectional asymmetry, as discussed below in more detail.

The materials of which membranes can be constructed also have a major effect on the applications for which the membranes may be used. For example, one major use for microfiltration membranes is to remove microorganisms such as bacteria and yeast from aqueous solutions in the areas of food technology, medicine, and pharmaceuticals. In these areas, it is important that the membranes withstand sterilization. Membranes are normally sterilized with steam at temperatures greater than 110°C. Many membranes will not withstand exposure to steam sterilization, because the materials from which they are made are not stable in the presence of steam. For example, membranes made of polyacrylonitrile are irreversibly damaged by exposure to steam. Further, other polymers such as polycarbonates and polyamides are hydrolyzed by steam.

Membranes made of materials such as polyetherimides, polysulfones, or polyvinylidene fluoride can be steam sterilized. Membranes made with these materials are hydrophobic, however, and are not spontaneously wettable with water. Water will not pass through a hydrophobic membrane at pressures lower than the bubble point unless the membrane is primed with a fluid. Further, hydrophobic membranes tend to adsorb high molecular weight components and foul.

Sulfone polymers are especially preferred materials for constructing membranes because of their availability, durability, versatility, and amenability to casting conditions that result in a great variety of membrane porosities and structures. As stated earlier, however, membranes prepared from sulfone polymers are hydrophobic. Therefore, in applications requiring operation of membranes in aqueous environments, hydrophobic sulfone membranes may be reacted with, or mixed with, moieties which cause the resulting membranes to become hydrophilic.

For example, hydrophilic membranes have been made by adding hydrophilic compounds such as polyvinylpyrrolidone (PVP) to the membrane. However, the hydrophilic compounds are often water-soluble, and they can leach out during filtration, thereby not only reducing the hydrophilicity of the membrane but also creating a risk of contaminating the filtrate. One can reduce leaching by crosslinking the wetting agent and intertwining it with the membrane polymer. For example, Roesink et al. in U.S. Patent No. 4,798,847 (now Re. No. 34,296) disclose crosslinking polyvinylpyrrolidone throughout the structure of the polysulfone membranes. However, while crosslinking hydrophilic moieties to membranes minimizes leaching, it can also reduce hydrophilicity in proportion to the number of crosslinks created. Moreover, it adds an additional step and complexity to the formulation and casting process of a membrane.

Hydrophilic, water insoluble polymers have been used to make membranes. Manufacture of membranes containing sulfonated polymers has been disclosed in, for example, U.S. Patent No. 3,855,122. However, these membranes retain large amounts of salt and are used primarily for reverse osmosis.

Other membranes containing mixtures of sulfonated and non-sulfonated polysulfone are described in U.S. Patent No. 5,246,582. The membranes are hollow fibers which are suitable for dialysis. They have small pores and are suitable for ultrafiltration, not microfiltration. The membranes are therefore limited in their application. In particular, microfiltration membranes are required for most applications in the food, medicine, and pharmaceutical industries.

Further, the only sulfonated polysulfone which was used in the '582 patent was sulfonated polyethersulfone. Expanding the range of sulfonated raw materials to be blended into the membranes could lead to a broader range of properties. Finally, those membranes are isotropic, as evidenced by the micrographs in the '582 patent. Asymmetric membranes have advantages over isotropic membranes, such as higher capacity.

Hydrophilic membranes containing sulfonated polymers have also been made by sulfonating polysulfone membranes. See, for example, U.S. Patent No. 4,866,099. Sulfonating already prepared membranes generates defects, and the resulting membranes have low flow rates, inconsistent wettability, wrinkles, and low solute retention.

Composite membranes containing polysulfone and sulfonated polymers have been disclosed in, for example, U.S. Patent No. 5,693,740. The composite membranes comprise a thin film of the polymer supported on an ultrafiltration membrane. Forming composite membranes requires two process steps, forming the support membrane and adding the film. Composite membranes are therefore more expensive and require more complicated manufacture than membranes that can be formed in a single step.

Another challenge in the manufacture of membranes is the creation of a membrane with pores that are small enough to retain macromolecules, while maintaining an acceptable flow rate of the fluid to be filtered. A membrane's resistance to fluid flow is a function of the diameter of the smallest, or retentive, pores through which the fluid must pass, and is also a function of the thickness of the layer of retentive pores.

Some filtration membranes have a layer of very small pores (termed herein a "skin") on one side, while other membranes do not contain this type of layer (termed herein "skinless"). The asymmetry of the pores within the membrane can vary, depending on the conditions under which the membrane is produced. For example, a perfectly symmetrical membrane would have pores of the same diameter on both faces and throughout the support structure between the two faces. However, a highly asymmetric membrane may have pores that change in diameter by 10:1, 100:1, 1,000:1, 10,000:1 or more from one face to the other. Asymmetric membranes are useful in many applications. For example, such membranes can be used for a variety of filtration applications for purification and testing in the food and beverage industry, water treatment, pharmaceuticals, and in medical laboratories.

There are advantages to both symmetric and asymmetric membranes. In general, however, asymmetric membranes are preferred, because the wide pores act as a prefilter to retain particles that are much larger than the skin pores before they come into contact with the skin layer. The prefiltering effect reduces plugging and prolongs the lifetime of the membrane.

Asymmetric membranes are well known in the art. For example, Wrasidlo in U.S. Patent Nos. 4,629,563 and 4,774,039 and Zepf in U.S. Patent Nos. 5,188,734 and 5,171,445, disclose asymmetric membranes and method for their production. Each of the Wrasidlo and Zepf patents disclose integral, highly asymmetric, microporously skinned membranes, having high flow rates and excellent retention properties. The membranes are generally prepared through a modified "phase inversion" process using a metastable two-phase liquid dispersion of polymer in solvent/nonsolvent systems which is cast and subsequently quenched in a nonsolvent. The Zepf patent discloses an improvement on the Wrasidlo patent.

The phase inversion process generally proceeds through the steps of casting a solution or a mixture comprising a polymer, a solvent, and a nonsolvent into a film, tube or fiber and precipitating the polymer. The most common method of precipitating the polymer is quenching in a nonsolvent liquid, generally water.

The nonsolvent and its concentration in the casting mix produce a region of instability which causes rapid precipitation when quenched in the nonsolvent liquid. This rapid precipitation may form a microporous skin at the interface and consequently can result in a highly asymmetric membrane.

In the past, when membranes were cast from chemically modified sulfone polymers, such as sulfonated sulfones, much of the potential for controlled variation in membrane structure, such as high cross sectional asymmetry of the membrane, was lost. It has been difficult to cast a highly asymmetric membrane from a hydrophilic polymer by conventional methods.

There is therefore a need for a method for preparing hydrophilic membranes which have pores large enough for microfiltration rather than ultrafiltration. Further, there is a need for a method of preparing hydrophilic membranes containing a range of sulfonated polymers with consistent properties. There is also a need for a method of preparing such membranes in which the hydrophilic components are nonleachable in water so that the membranes do not become hydrophobic when the hydrophilic components are leached out by water. In addition, there is a need for a method of casting membranes from casting solutions containing polysulfones and polyethersulfones together with sulfonated polymers to produce asymmetric membranes with longer lifetimes than symmetric membranes. Finally, there is a need for a method of producing hydrophilic membranes having a wide range of pore distributions.

### SUMMARY OF THE INVENTION

The present invention provides, in one aspect, an integral internally hydrophilic membrane cast from a solution or suspension. The solution or suspension comprises from 8 to 20wt. % of a non-slllfonated sulfone polymer, from 0.1 to 6wt. % of a sulfonated sulfone copolymer, a nonsolvent, and a solvent. The membrane has a first surface and a second surface, each surface having pores thereon, and a porous supporting structure between the first and second surface, wherein the porous supporting structure includes a reticulated network of flow channels between the pores of the first surface and the second surface. The sulfone polymer may be, for example, polysulfone, polyethersulfone, or polyarylsulfone. The sulfonated copolymer may include units of polysulfone, polyethersulfone, or polyarylsulfone, and the sulfonated copolymer may be, for example: 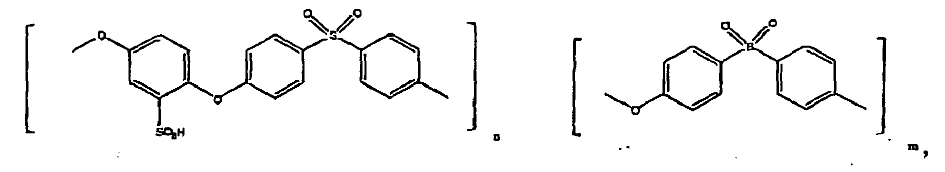 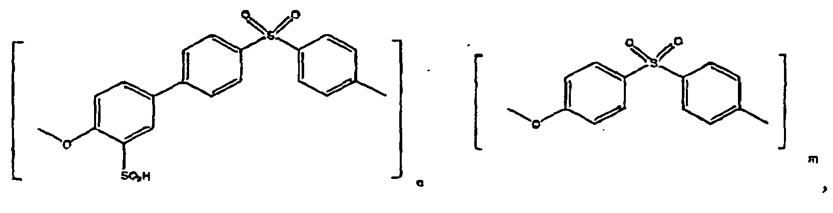 or 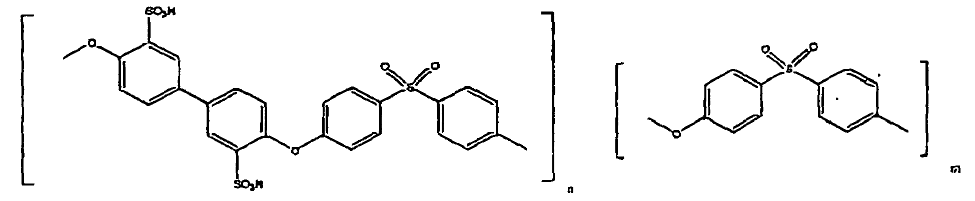 The ratio of m to n in the subunits of the copolymer may be between 4 and 99. The nonsolvent of the membrane of this aspect of the invention may be, for example, alcohols, such as t-amyl alcohol or 1-butanol, ethers, surfactants, or water. The solvent may be N-melthylpyrrolidone.

The membrane of the invention may be an ultrafiltration membrane, and may have a molecular weight exclusion cutoff of about 10 kDa, or about 100 kDa. Likewise, the membrane may be a microfilter, and may have a mean flow pore size of less than 0.1 micron, 0.2 micron, or 0.3 to 1.0 micron. The membrane is asymmetric, and the pores of the first surface are at least about 5 times smaller than the pores at the second surface. The flow channels of the porous supporting structure gradually increase in diameter from first surface to the second surface.

In another aspect, the invention provides a method of forming an integral internally hydrophilic membrane, the method comprising:
providing a casting solution or suspension comprising from 8 to 20wt. % of a non-sulfonated sulfone polymer, from 0.1 to 6wt. % a sulfonated sulfone copolymer, a solvent, and a nonsolvent;
   wherein the casting solution is a stable clear homogeneous solution or a stable colloidal dispersion;
casting the solution or suspension to form a thin film;
exposing the thin film to a gaseous environment having a relative humidity of from 20 to 100%, wherein the thin film is exposed to the gaseous environment for up to 30 seconds;
coagulating the film in a quench bath at a temperature of from 1 to 60°C; and
recovering an integral internally hydrophilic membrane having a first surface and a second surface, each surface having pores thereon, the membrane also having a porous supporting structure between the first and second surface, wherein the porous supporting structure comprises a reticulated network of flow channels between the pores of the first surface and the second surface, wherein the membrane is asymmetric, wherein the pores of the first surface are at least 5 times smaller than the pores of the second surface, and wherein the flow channels of the porous supporting structure gradually increase in diameter from the first surface to the second surface.

In the method of this aspect of the invention the sulfone polymer may be, for example, polysulfone, polyethersulfone, and polyarylsulfone, and the sulfonated copolymer may include units of polysulfone, polyethersulfone, or polyarylsulfone, such as, for example: 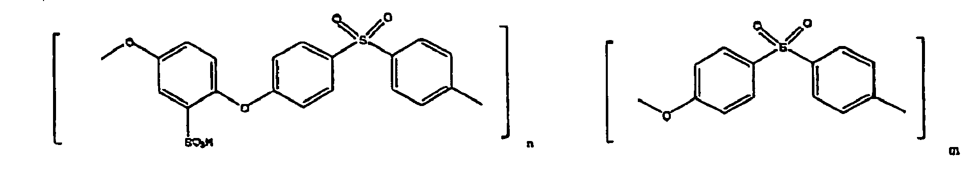 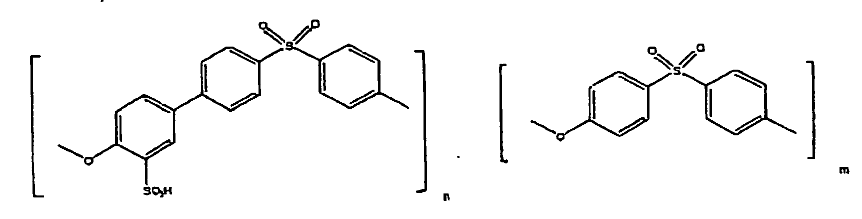 , or 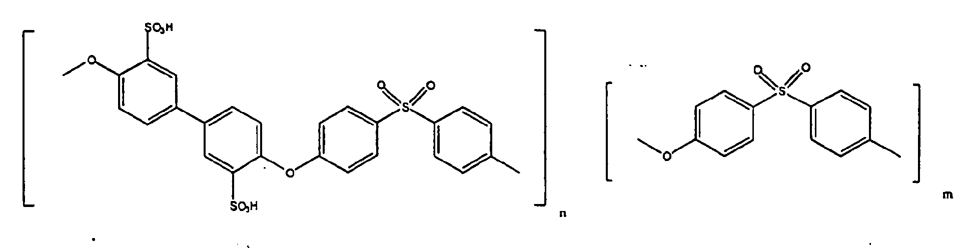 In this aspect of the invention, the ratio of m to n in the subunits of the copolymer may be between 4 and 99. The nonsolvent may be, for example, alcohols such as t-amyl alcohol or 1-butanol, ethers, surfactants, and water. The solvent may be N-methylpyrrolidone.

The method may produce an ultrafiltration membrane, such as one having, for example, a molecular weight exclusion cutoff of about 10 kDa, or one having a molecular weight exclusion cutoff of about 100 kDa. Likewise, the method may produce a microfilter, which may have a mean flow pore size of less than about 0.1 micron, or about 0.2 micron, or 0.3 to 1.0 micron. The membranes produced by the method of the invention are asymmetric, and the pores of the first surface are at least about 5 times smaller than the pores at the second surface. In such a membrane, the flow channels of the porous supporting structure the gradually increase in diameter from first surface to the second surface.

### BRIEF DESCRIPTION OF THE DRAWINGS

Figure 1 is a scanning electron micrograph taken at a magnification of 1500X of the cross section of a membrane produced by the method described in Example 2.
Figure 2 is a scanning electron micrograph taken at a magnification of 750X of the cross section of a membrane produced by the method described in Example 3.

### DETAILED DESCRIPTION OF THE PREFERRED EMBODIMENT

The present invention relates to hydrophilic membranes that have high flow rates, are non-leachable, have consistent properties, and can contain a range of sulfonated polymers. Further, the membranes are asymmetric. Further, the asymmetric membranes can be prepared to have a wide range of pore sizes and distributions. For example, the membranes can be prepared to be microfiltration membranes or ultrafiltration membranes.

Ultrafiltration membranes are typically categorized in terms of molecular weight exclusion cutoff values, which may be determined based on the efficiency of retention by the membrane of substances having a known molecular weight, such as, for example, polysaccharides or proteins. The ultrafilters of the invention may have molecular weight cutoff values of, for example, about 10 kDa or less, 30 kDa, 50 kDa, 100 kDa, or higher.

Microfiltration membranes may be categorized based on the size of the limiting pores of the membranes. Depending on the structure of the membranes, the limiting pores may be at one surface thereof, in which case they may be referred to as "skin" pores. Alternatively, the limiting pores may be within the membrane, either just beneath one surface or deeper in the internal membrane structure. When the limiting pores are not at the surface, it is difficult to visually measure their size using microscopy. In such cases, mean flow pore size may be determined by porometric tests as described herein. Accordingly, microfiltration membranes of the invention may have limiting pores or mean flow pore sizes of, for example, about 0.03 µm or less, 0.1 µm, 0.2 µm, 0.5 µm, 1.0 µm, 2.0 µm, and larger.

Asymmetric membranes are characterized by changes in the size of pores of flow channels as measured from one surface or internal position in the membrane to another surface of the membrane or another internal position therein. A relatively straightforward way of quantifying asymmetry is in terms of the ratio of average pore diameters on the two surfaces. For example, asymmetric membranes of the invention may have pore size ratios of 2, 5, 10, 50, 100, 500, 1000 or more. Asymmetry is gradual within the thickness of the membrane.

The membranes comprise a non-sulfonated sulfone polymer and one or more sulfonated copolymers. The non-sulfonated sulfone polymer and the sulfonated copolymer are blended after the polymer or copolymer is sulfonated, thereby avoiding degradation of an already formed membrane through sulfonation.

Preferred sulfone polymers are polysulfone, polyarylsulfone, and polyethersulfone. Polyethersulfone (PES) is the most preferred sulfone polymer.

In one embodiment of the invention, the sulfonated copolymer comprises the copolymer: 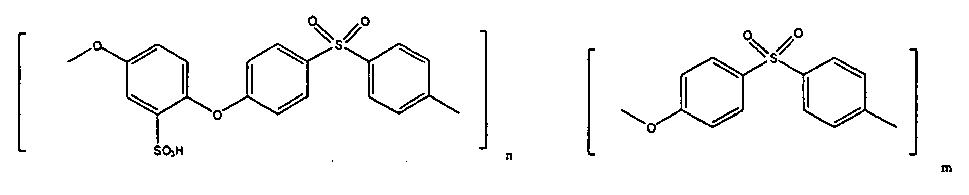 The copolymer shown above is commercially available from US Filter/Acumem under the tradename SPEES/PES^{™}.

In another embodiment, the sulfonated copolymer comprises the copolymer: 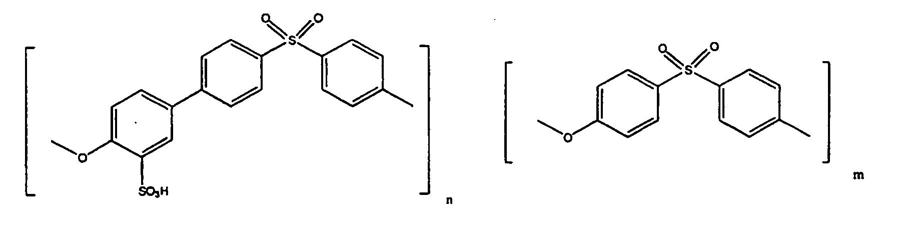 The copolymer shown above is commercially available from US Filter/Acumem under the tradename POLYMER 388^{™}.

In another embodiment, the sulfonated copolymer comprises the copolymer: 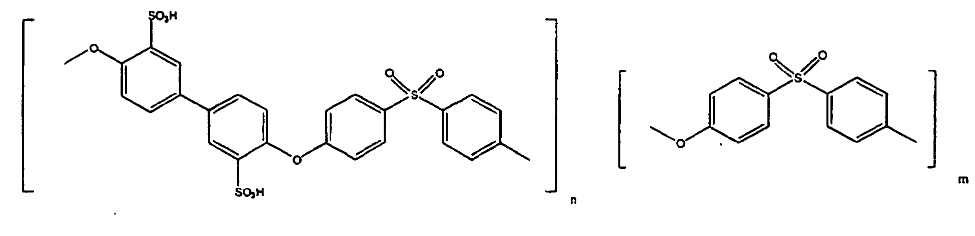 The copolymer shown above is commercially available from US Filter/Acumem under the tradename SPEDES/PES^{™}. For the foregoing copolymers, the m/n ratio of the two kinds of subunits may range from 4 to 99, wherein, for example, n=1, m=99 to n=20, m=80.

In one embodiment of the present invention, membranes are prepared by providing a casting solution comprising between 8 and 20% by weight of a non-sulfonated sulfone polymer, between 0.1 and 6% by weight of a sulfonated polymer or copolymer, between 44 and 81.9% by weight of a solvent, and between 10 and 30% by weight of a nonsolvent or pore former. Polyethersulfone is the preferred sulfone polymer. If the sulfonated copolymer is a copolymer of a sulfonated polymer and PES, the weight percent is the weight percent of the complete copolymer, not the weight percent of the sulfonated polymer alone.

The sulfonated polymer or copolymer is a different material from the non-sulfonated sulfone polymer referenced alone. It is sulfonated before preparing the casting solution or before forming the membrane. The weight % of the sulfonated copolymer in the casting solution is preferably between 0.1 and 6 wt%, more preferably between 0.2 and 3 wt%, and most preferably between 0.4 and 2 wt%.

The solvent is preferably N-methylpyrrolidone (NMP) or dimethylformamide (DMF). Other suitable solvents include, but are not limited to, dimethylacetamide, dioxane, dimethylsulfoxide, chloroform, and tetrachloroethane propionic acid and tetrahydrofuran.

Suitable examples of nonsolvents or pore formers include, but are not limited to, 2-methoxyethanol, t-amyl alcohol, 1-butanol, methanol, ethanol, isopropanol, hexanol, heptanol, octanol, acetone, methylethylketone, methylisobutylketone, butyl ether, ethyl acetate, amyl acetate, glycerol, diethyleneglycol, di(ethyleneglycol)diethylether, di(ethyleneglycol)dibutylether, surfactants such as TWEEN 20, 40, 60, 80, and water.

The casting solution is preferably a stable clear homogeneous solution or stable colloidal dispersion. The casting solution is then cast to form a thin film and may be exposed to a gaseous environment, such as air, for between 0 and 30 seconds. The relative humidity of the gaseous environment may range from 20 to 100%, preferably from 30 to 90%, more preferably from 40 to 75%, and most preferably from 50 to 60%. The thin film is then coagulated into a stable membrane by introducing the thin film into a quench bath having a temperature between 1°C and 60°C, preferably between 10°C and 50°C, more preferably between 20°C and 40°C, and most preferably between 22°C and 30°C. Water is the generally preferred quench liquid for economic and environmental reasons.

In other embodiments of the invention, membranes can be formed from blends of polysulfones and sulfonated copolymers of the invention as a melt-blown membrane. Membranes can be formed as flat sheet membranes or hollow fiber membranes, and can be packaged into filter cartridges.

### EXAMPLES

The following examples are provided to illustrate the present invention. However, such examples are merely illustrative and are not intended to limit the scope of the claims.

### EXAMPLE 1

### Preparation of Internally Hydrophilic Cast Membranes With SPEES/PES^{™}, PES, and t-Amyl Alcohol

A casting solution was prepared containing, by weight, 4% SPEES/PES^{™}, 14% polyethersulfone (EP-6020P, manufactured by BASF, Bridgeport, NJ), 18.6% t-amyl alcohol as the non-solvent, and 63.4% dimethylformamide (DMF) as the solvent. Membrane samples were cast onto a moving belt of polyethylene coated paper using a casting knife with a knife gap of 17 mils (425 µm). Following casting, the membranes were quenched in a water bath at about 20°C. After coagulation, the membranes were washed with deionized water and then air dried or dried with an additive such as glycerol to prevent the pores from collapsing.

The membranes thus formed were internally hydrophilic. Each of the membranes was tested for water permeability and retention of the protein immunoglobulin G (IgG ~160 kDa) at 10 psi (about 68.7 kPa) on a 25 mm diameter disk (approximately 3.8 cm² effective filtering area). The test results are shown in Table 1.

### EXAMPLE 2

### Preparation of Internally Hydrophilic Cast Membranes With POLYMER 388^{™}, PES, and t-Amyl Alcohol

A process similar to that described in Example 1 was used in the present Example with a casting solution containing 2% POLYMER 388^{™}, 16% polyethersulfone, 18% t-amyl alcohol, and 64% DMF. Membrane samples were cast, quenched, and dried as described in Example 1.

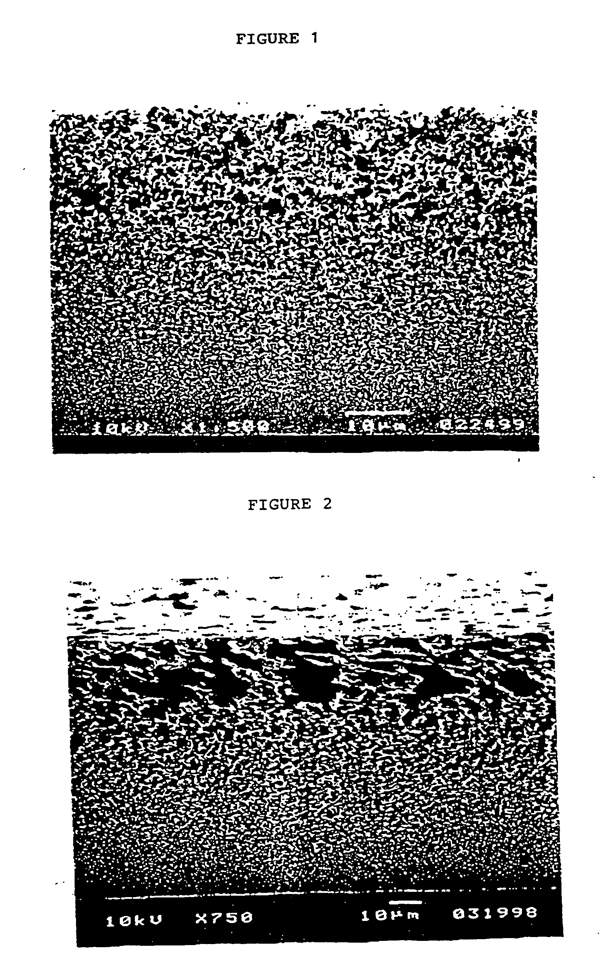

The membranes thus formed were internally hydrophilic. The test results for water permeability, IgG retention, and wettability are shown in Table 1. SEM showed that the membrane had an asymmetric cross-sectional structure, as shown in Figure 1.

### EXAMPLE 3

### Preparation of Internally Hydrophilic Cast Membranes With SPEDES,/PES^{™} PES, and t-Amyl Alcohol

A process similar to that described in Example 2 was used in the present Example with a casting solution containing 1.5% SPEDES/PES^{™}, 15% polyethersulfone, 18.5% t-amyl alcohol, and 66% DMF. Membrane samples were cast, quenched, and dried as described in Example 1.

The membranes thus formed were internally hydrophilic. Each of the membranes was tested for water permeability and IgG retention as in Example 1. The test results are shown in Table 1. An SEM of the cross section of the membrane is shown in Figure 2, and demonstrates that the membrane had an asymmetric cross-sectional structure. The membrane of Example 3 was more asymmetric than the membrane of Example 2.

The membrane was tested for dye retention at 55 psi (about 378 kPa) on a 25-mm diameter disk stirred cell. Using a 10 ppm solution of methylene blue cationic dye, the membrane retained more than 99.9% of the dye from more than 100 ml of solution. Efficiency of cationic dye is a measure of the presence of negatively charged moieties in the membrane.

The results of the water flow and retention experiments for the membranes of Examples 1-3 are shown in Table 1. The water flow test in the table was for a 25 mm disk at 10 psi (68.7 kPa).

**TABLE 1**

| **Water Flow and Retention of Membranes Containing PES and Sulfonated Polymers** | | | |
|---|---|---|---|
| **Example No.** | **Water Flow (ml/min)** | **% IgG Retention** | **Wettability** |
| 1 | 5.2 | 95.3 | Instant Wetting |
| 2 | 5.6 | 98 | Instant Wetting |
| 3 | 10 | 90 | Instant Wetting |

As will be observed, all three membranes had high water flow and good retention of the IgG protein. The membrane of Example 3, containing SPEDES/PES^{™}, had the highest water flow but retained less of the IgG protein than the membranes from the other two Examples.

The following Example describes the preparation of an ultrafiltration membrane with smaller pores than those in Examples 1-3. The casting solution was similar to that of Example 2 but contained a lower level of solids. This Example demonstrates that, although generally lowering the level of solids in the casting solution tends to lead to a membrane with larger pores (see Examples 5-7), there are other factors which determine the pore size of the membrane, such as, for example, ratio of solvent to nonsolvent, time of air gap exposure, relative humidity within the air gap, and temperature of casting or quenching. Thus, the pores of the membrane of Example 4 are smaller than those of those of Example 2, even though the casting solution of Example 4 had lower solids content.

Because of the smaller pores in the membrane of Example 4, bovine serum albumin (BSA ~67 kDa), which is a smaller globular protein than IgG, was used to measure protein exclusion.

### EXAMPLE 4

### Preparation of a Hydrophilic Ultrafiltration Membrane with POLYMER 388^{™}, PES, and Amyl Alcohol

A process similar to that described in Example 2 was used in the present Example with a casting solution containing 1.5% POLYMER 388^{™}, 15% polyethersulfone, 18.5% t-amyl alcohol, and 66% DMF. Membrane samples were cast and quenched as described in Example 1, then air dried.

The membranes thus formed were internally hydrophilic. The membranes were tested for water permeability and BSA retention at 10 psi (68.7 kPa) on a 25 mm diameter disk. The test results are shown in Table 2. The resulting membrane had an asymmetric cross-sectional structure similar to the cross section of the membrane of Example 3. The cross section was more highly asymmetric than for the membrane of Example 2.

The membrane excluded 95.8% of the BSA, a smaller protein than the IgG used in the tests of Examples 1-3. Although the water flow rate of 3.5 ml/min was lower than the flow rates of 5.2 to 10 ml/min obtained with the membranes of Examples 1-3, the flow rate is still high as compared to other ultrafilters. The lower flow rate for the membrane of Example 4 is not unexpected, because the membrane has smaller pores than the membranes of Examples 1-3.

The membranes were tested for cationic dye retention at 55 psi (378 kPa) on a 25-mm diameter disk stirred cell. The membrane retained more than 99.9% dye from 100 ml of a 10 ppm solution of methylene blue.

**TABLE 2**

| **Water Flow and BSA Retention for Membrane of Example 4 Prepared from POLYMER 388**^{**™**}**, PES, and t-Amyl Alcohol** | | | |
|---|---|---|---|
| **Example No.** | **Water Flow (ml/min)** | **% BSA Retention** | **Wettability** |
| 4 | 3.5 | 95.8 | Instant Wetting |

Later examples will compare the hydrophilic ultrafiltration membranes of Examples 1-4 with membranes prepared without sulfonated polymers to show the benefits of forming membranes from blends of PES and sulfonated polymers rather than from PES alone.

In Examples 5, 6, and 7, the solids levels in the casting solutions were reduced from the levels in Examples 1-4. Reducing the solids levels in the casting solutions in the following examples produced membranes with larger pores than those in the membranes of Examples 1-4. The membranes of the following Examples 5, 6, and 7 were microfiltration membranes rather than the ultrafiltration membranes of Examples 1-4. Examples 5, 6, and 7 therefore demonstrate that the method of the invention can produce microfiltration membranes as well as ultrafiltration membranes.

### EXAMPLE 5

### Preparation of Microfiltration Membrane with SPEES/PES^{™}, PES, and t-Amyl Alcohol

A process similar to that described in Example 1 was used in the present Example with a casting solution containing 1% polymer SPEES/PES^{™}, 10% polyethersulfone, 19% t-amyl alcohol, and 70% DMF. Membrane samples were cast, quenched, and dried as described in Example 4.

The membranes thus formed were internally hydrophilic, microfiltration membranes with larger pores than the ultrafiltration membrane of Examples 1-4. As a result, the protein size exclusion measurements used in the first four Examples were not suitable for measuring the pore size properties of the produced membrane. The membrane was therefore tested for mean flow pore (MFP) size with a Coulter Porometer using a 25 mm disk. The test results are shown in Table 3. The membrane had an asymmetric cross-sectional structure.

The following Example demonstrates the casting of a membrane in a water bath at higher temperature than for Examples 1-5. Quenching the casting solution in a water bath at higher temperature produced a membrane with larger pores than the membranes which were quenched at lower temperature.

### EXAMPLE 6

### Preparation of a Microfiltration Membrane Containing SPEES/PES^{™}, PES, and t-Amyl Alcohol Quenched at Higher Temperature

A process similar to that described in Example 5 was used in the present Example with a casting solution containing 0.6% polymer SPEES/PES^{™}, 10% polyethersulfone, 20% t-amyl alcohol, 69.4% DMF. Membrane samples were cast, quenched, and dried as described in Example 4, except that, following casting, the membranes were quenched in a water bath at about 43°C, rather than 20°C.

The membranes thus formed were internally hydrophilic. Each of the membranes was tested for MFP by Coulter Porometer. The test results are shown in Table 3. The resulting membranes had asymmetric cross-sectional structure.

The mean flow pore size was 0.2 µm, larger than the 0.08 µm pore size for the membrane of Example 5 and far larger than the membranes of the prior examples. Raising the quench temperature to 43°C in this Example therefore led to a membrane having larger pores than the membranes quenched at 20°C.

The following Example demonstrates the use of 1-butanol in the casting solution in place of the tertiary amyl alcohol. It shows that other pore forming materials or nonsolvents can be used in place of the t-amyl alcohol of the previous examples.

### EXAMPLE 7

### Preparation of a Microfiltration Membrane from a Casting Solution of SPEES/PES^{™}, PES, 1-Butanol, and DMF

A process similar to that described in Example 2 was used in the present Example with a casting solution containing 0.6% polymer SPEES/PES^{™}, 10% polyethersulfone, 20.2% 1-butanol, and 69.2% DMF. Membrane samples were cast, quenched, and dried as described in Example 4.

The membranes thus formed were internally hydrophilic. Each of the membranes was tested for MFP by Coulter Porometer. The test results are shown in Table 3. The resulting membranes showed an asymmetric cross-sectional structure. Water flow was tested using a 47 mm disk of filter material with and effective filtering area of 9.2 cm² at 10 psi (68.7 kPa). Water flow rates can be increased significantly (at least 50%) by oven drying the membranes.

Example 7 therefore demonstrates that 1-butanol can be used as pore former in addition to the t-amyl alcohol pore former of the prior examples.

**TABLE 3**

| **Water Flow and MFP Size of Microfiltration Membranes Containing PES and Sulfonated Polymers** | | | |
|---|---|---|---|
| **Example No.** | **Water Flow (ml/min)** | **MFP Size (µm)** | **Wettability** |
| 5 | 200 | 0.08 | Instant Wetting |
| 6 | 350 | 0.2 | Instant Wetting |
| 7 | 400 | 0.29 | Instant Wetting |

The data in Table 3 for the membranes of Examples 5-7 show that the method of the present invention can produce microfiltration membranes with good water flow and pore size, in addition to the ultrafiltration membranes of Examples 1-4.

The following Example demonstrates that omitting the sulfonated polymer from the casting solution of Example 2 produces a hydrophobic membrane rather than the hydrophilic membrane of Example 2.

### COMPARATIVE EXAMPLE A

### Preparation of a Membrane from a Casting Solution of PES, t-Amyl Alcohol, and DMF

A casting solution similar to that of Example 2 was prepared except that no POLYMER 388™ was included in the solution. The casting solution contained 18% polyethersulfone, 18% t-amyl alcohol, and 64% DMF. Membrane samples were cast, quenched, and dried as described in Example 1.

The membranes thus formed were hydrophobic rather than hydrophilic. Each of the membranes was tested for water permeability and protein (IgG and BSA) retention at 10 psi (68.7 kPa) on a 25-mm diameter disk. The IgG retention was less than 50%, compared with 98% for the membrane of Example 2. The BSA retention was less than 5%. The water flow rates were similar to those for the membrane in Example 2.

Comparative Example A shows that forming membranes from casting solutions without the sulfonated polymer produces a hydrophobic membrane rather than a hydrophilic membrane. Further, the 50% IgG retention of the membrane of Comparative Example A with no sulfonated polymer was far lower than the 98% IgG retention for the membrane of Example 2, which contained the sulfonated POLYMER 388^{™}. Adding the sulfonated POLYMER 388^{™} to the casting solution therefore formed a more selective membrane as well as forming a hydrophilic membrane.

The following Example describes the casting of a membrane from a solution similar to that of Example 4 but with no sulfonated polymer. The membrane of Example 4 had smaller pores than the membrane of Example 2. The Example below therefore demonstrates that the benefit of adding sulfonated polymer to the casting solution is also advantageous for membranes with smaller pores.

### COMPARATIVE EXAMPLE B

### Preparation of a Membrane from a Casting Solution of PES, t-Amyl Alcohol, and DMF

A casting solution similar to Example 4 was prepared with the exception that the solution contained no sulfonated POLYMER 388^{™}. The casting solution contained 16.5% polyethersulfone, 18.5% t-amyl alcohol, and 66% DMF. Membrane samples were cast, quenched, and dried as described in Example 1.

The membranes thus formed were hydrophobic. By contrast, the membranes of Example 4, which were formed with a similar casting solution but with the sulfonated POLYMER 388^{™}, were hydrophilic. Each of the membranes was tested for water permeability and BSA retention at 10 psi (68.7 kPa) on a 25-mm diameter disk. The BSA retention was less than 5%, versus the 95.8% of Example 4.

Omitting the sulfonated polymer, POLYMER 388^{™}, from the casting solution in Comparative Example B therefore produced a hydrophobic membrane rather than a hydrophilic membrane, as in Example 4. Further, the hydrophobic membrane of Comparative Example B retained less than 5% BSA versus 95.8% BSA for the membrane of Example 4. Including the sulfonated polymer in the casting solution therefore formed a hydrophilic membrane rather than a hydrophobic membrane and also greatly improved the protein retention.

### EQUIVALENTS

The present invention has been described in connection with specific embodiments thereof. It will be understood that it is capable of further modification, and this application is intended to cover any variations, uses, or adaptations of the invention following, in general, the principles of the invention and including such departures from the present disclosure as come within known or customary practiced in the art to which the invention pertains and as may be applied to the essential features hereinbefore set forth, and as fall within the scope of the invention and any equivalents thereof.

## Claims

1. An integral internally hydrophilic membrane cast from a solution or suspension comprising from 8 to 20wt. % of a non-sulfonated sulfone polymer, from 0.1 to 6wt % of a sulfonated sulfone copolymer, a nonsolvent, and a solvent, the membrane having a first surface and a second surface, each surface having pores thereon, the membrane also having a porous supporting structure between the first and second surface, wherein the porous supporting structure comprises a reticulated network of flow channels between the pores of the first surface and the second surface, wherein the membrane is asymmetric, wherein the pores of the first surface are at least 5 times smaller than the pores of the second surface, and wherein the flow channels of the porous supporting structure gradually increase in diameter from first surface to the second surface.

2. A membrane according to Claim 1, wherein the non-sulfonated sulfone polymer is selected from the group consisting of polysulfone, polyethersulfone, and polyarylsulfone.

3. A membrane according to Claim 1 or Claim2, wherein thenon-sulfonated sulfone polymer is polyethersulfone.

4. A membrane according to any one of Claims 1 to 3, wherein the sulfonated sulfane copolymer comprises units of polysulfone, polyethersulfone, or polyarylsulfone.

5. A membrane according to Claim 4, wherein the sulfonated sulfone copolymer comprises units of polyethersulfone.

6. A membrane according to any one of Claims 1 to 4, wherein the sulfonated sulfone copolymer is selected from: 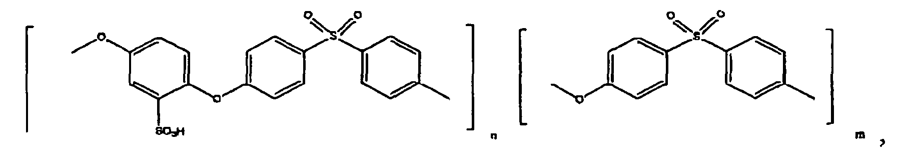 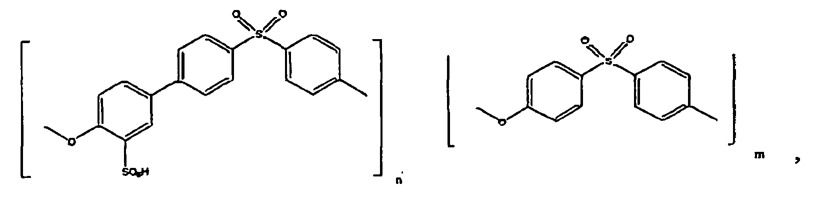 and

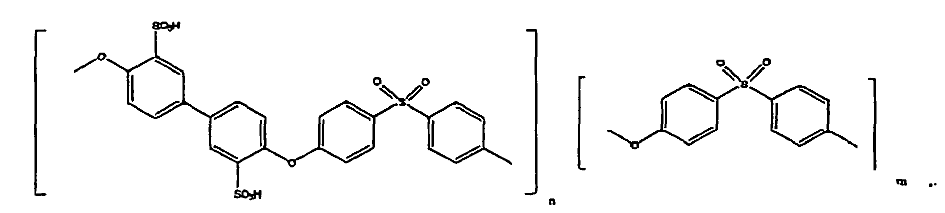

7. A membrane according to Claim 6, wherein the ratio of m to n in the subunits of the copolymer is between 4 and 99.

8. A membrane according to any one of Claims 1 to 7, wherein the membrane is an ultrafiltration membrane.

9. A membrane according to Claim 8, having a molecular weight exclusion cutoff of 10 kDa

10. A membrane according to Claim 8, having a molecular weight exclusion cutoff of 100 kDa.

11. A membrane according to any one of Claims 1 to 7, wherein the membrane is a microfilter.

12. A membrane according to Claim 11, having a mean flow pore size of less than 0.1 µm.

13. A membrane according to Claim 11, having a mean flow pore size of 0.2 µm.

14. A membrane according to Claim 11, having a mean flow pore size of 0.3 to 1.0 µm.

15. A method of forming an integral internally hydrophilic membrane, the method comprising:
providing a casting solution or suspension comprising from 8 to 20wt. % of a non-sulfonated sulfone polymer, from 0.1 to 6wt. % a sulfonated sulfone copolymer, a solvent, and a nonsolvent;
wherein the casting solution is a stable clear homogeneous solution or a stable colloidal dispersion;
casting the solution or suspension to form a thin film;
exposing the thin film to a gaseous environment having a relative humidity of from 20 to 100%, wherein the thin film is exposed to the gaseous environment for up to 30 seconds;
coagulating the film in a quench bath at a temperature of from 1 to 60°C; and
recovering an integral internally hydrophilic membrane having a first surface and a second surface, each surface having pores thereon, the membrane also having a porous supporting structure between the first and second surface, wherein the porous supporting structure comprises a reticulated network of flow channels between the pores of the first surface and the second surface, wherein the membrane is asymmetric, wherein the pores of the first surface are at least 5 times smaller than the pores of the second surface, and wherein the flow channels of the porous supporting structure gradually increase in diameter from the first surface to the second surface.

16. A method according to Claim 15, wherein the non-sulfonated sulfone polymer is selected from polysulfone, polyethersulfone, and polyarylsulfone.

17. A method according to Claim 15 or Claim 16, wherein the non-sulfonated sulfone polymer is polyethersulfone.

18. A method according to any one of Claims 15 to 17, wherein the sulfonated copolymer comprises units of polysulfone, polyethersulfone, or polyarylsulfone.

19. A method according to any one of Claims 15 to 18, wherein the sulfonated copolymer comprises units of polyethersulfone.

20. A method according to any one of Claims 15 to 18, wherein the sulfonated copolymer is selected from: 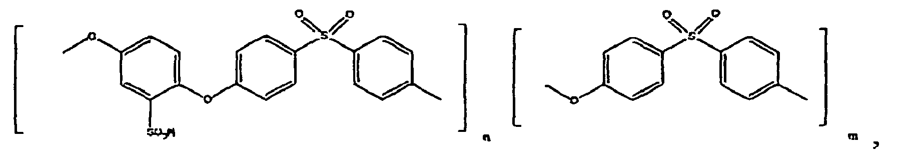 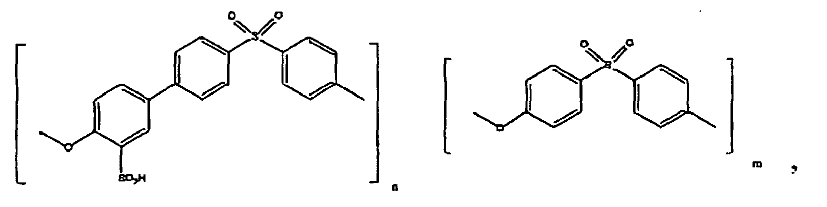 and

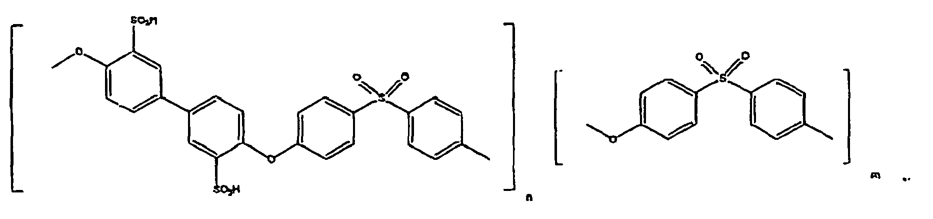

21. A method according to Claim 20, wherein the ratio of m to n in the subunits of the copolymer is between 4 and 99.

22. A method according to any one of Claims 15 to 21, wherein the nonsolvent is selected from alcohols, ethers, surfactants, and water.

23. A method according to Claim 21, wherein the nonsolvent is t-amyl alcohol or 1-butanol.

24. A method according to any one of Claims 15 to 21, wherein the solvent is N-methylpyrrolidone.

25. A method according to any one of Claims 15 to 24, wherein the membrane is an ultrafiltration membrane.

26. A method according to Claim 25, wherein the membrane has a molecular weight exclusion cutoff of 10 kDa.

27. A method according to Claim 25, wherein the membrane has a molecular weight exclusion cutoff of 100 kDa.

28. A method according to any one of Claims 15 to 24, wherein the membrane is a microfilter.

29. A method according to Claim 28, wherein the membrane has a mean flow pore size of less than 0.1 µm.

30. A method according to Claim 28, wherein the membrane has a mean flow pore size of 0.2 µm.

31. A method according to Claim 28, wherein the membrane has a mean flow pore size of 0.3 to 1.0 µm.

32. A method according to any one of claims 15 to 31, wherein the sulfonated copolymer comprises from 0.4 to 2 wt. % of the casting solution.

33. A method according to any one of Claims 15 to 32, wherein the solvent comprises from 44 to 81.9 wt. % of the casting solution.

34. A method according to any one of Claims 15 to 33, wherein the nonsolvent comprises from 10 to 30 wt. % of the casting solution.

35. A method according to any one of claims 15 to 34, wherein the gaseous environment comprises air.

36. A method according to any one of claims 15 to 35, wherein the relative humidity of the gaseous environment is from 50 to 60%.

37. A method according to any one of claims 15 to 36, wherein the temperature of the quench bath is from 22 to 30°C.

## Patentansprüche

1. Integrale, intern hydrophile Membran, die aus einer Lösung oder Suspension aus 8 bis 20 Gew.-% eines nichtsulfonierten Sulfonpolymers, 0,1 bis 6 Gew.-% eines sulfonierten Sulfoncopolymers, einem Nichtlösungsmittel und einem Lösungsmittel gegossen wurde, mit einer ersten Oberfläche und einer zweiten Oberfläche mit Poren auf jeder Oberfläche und einer porösen Stützstruktur zwischen der ersten und zweiten Oberfläche, wobei die poröse Stützstruktur zwischen den Poren der ersten Oberfläche und der zweiten Oberfläche ein retikuliertes Netz von Strömungskanälen aufweist, die Membran asymmetrisch ist, die Poren der ersten Oberfläche wenigstens 5 mal kleiner als die Poren der zweiten Oberfläche sind und die Strömungskanäle der porösen Stützstruktur von der ersten Oberfläche zu der zweiten Oberfläche im Durchmesser allmählich zunehmen.

2. Membran nach Anspruch 1, bei der das nichtsulfonierte Sulfonpolymer aus der aus Polysulfon, Polyethersulfon und Polyarylsulfon bestehenden Gruppe ausgewählt ist.

3. Membran nach Anspruch 1 oder Anspruch 2, bei der das nichtsulfonierte Sulfonpolymer Polyethersulfon ist.

4. Membran nach einem der Ansprüche 1 bis 3, bei der das sulfonierte Sulfoncopolymer Polysulfon-, Polyethersulfon- oder Polyarylsulfoneinheiten aufweist.

5. Membran nach Anspruch 4, bei der das sulfonierte Sulfoncopolymer Polyethersulfoneinheiten aufweist.

6. Membran nach einem der Ansprüche 1 bis 4, bei der das sulfonierte Sulfoncopolymer unter 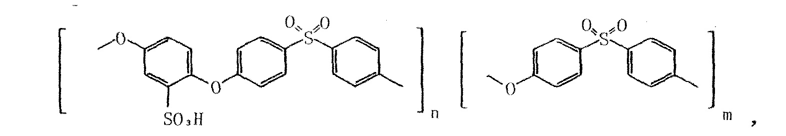 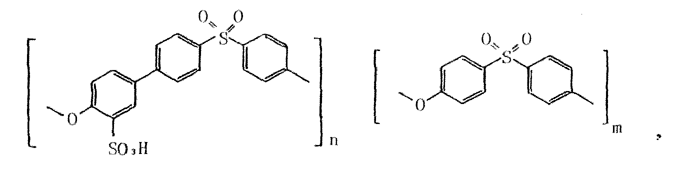 und 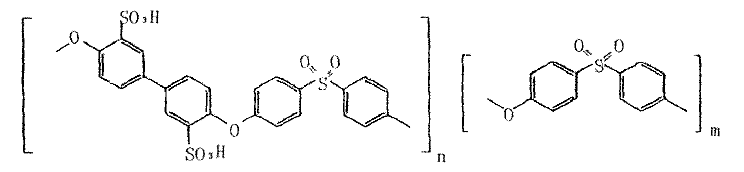 ausgewählt ist.

7. Membran nach Anspruch 6, bei der das Verhältnis von m zu n der Untereinheiten des Copolymers zwischen 4 und 99 ist.

8. Membran nach einem der Ansprüche 1 bis 7, bei der die Membran eine Ultrafiltrationsmembran ist.

9. Membran nach Anspruch 8 mit einer Molekulargewichtsausschlußgrenze von 10 kDa.

10. Membran nach Anspruch 8 mit einer Molekulargewichtsausschlußgrenze von 100 kDa.

11. Membran nach einem der Ansprüche 1 bis 7, bei der die Membran ein Mikrofilter ist.

12. Membran nach Anspruch 11 mit einer mittleren Fließporengröße von weniger als 0,1 µm.

13. Membran nach Anspruch 11 mit einer mittleren Fließporengröße von 0,2 µm.

14. Membran nach Anspruch 11 mit einer mittleren Fließporengröße von 0,3 bis 1,0 µm.

15. Verfahren der Bildung einer integralen, intern hydrophilen Membran, bei dem man
eine Gießlösung oder -suspension mit 8 bis 20 Gew.-% eines nichtsulfonierten Sulfonpolymers, 0,1 bis 6 Gew.-% eines sulfonierten Sulfoncopolymers, einem Lösungsmittel und einem Nichtlösungsmittel vorsieht,
wobei die Gießlösung eine beständige klare homogene Lösung oder eine beständige kolloidale Dispersion ist,
die Lösung oder Suspension unter Bildung eines dünnen Films gießt,
den dünnen Film einer gasförmigen Umgebung mit einer relativen Feuchtigkeit von 20 bis 100% aussetzt, wobei der dünne Film der gasförmigen Umgebung bis zu 30 Sekunden ausgesetzt wird,
den Film in einem Abschreckbad bei einer Temperatur von 1 bis 60°C koaguliert, und
eine integrale, intern hydrophile Membran gewinnt mit einer ersten Oberfläche und einer zweiten Oberfläche mit Poren auf jeder Oberfläche und einer porösen Stützstruktur zwischen der ersten und zweiten Oberfläche, wobei die poröse Stützstruktur zwischen den Poren der ersten Oberfläche und der zweiten Oberfläche ein retikuliertes Netz von Strömungskanälen aufweist, die Membran asymmetrisch ist, die Poren der ersten Oberfläche wenigstens 5 mal kleiner als die Poren der zweiten Oberfläche sind und die Strömungskanäle der prösen Stützstruktur von der ersten Oberfläche zu der zweiten Oberfläche im Durchmesser allmählich zunehmen.

16. Verfahren nach Anspruch 15, bei dem das nichtsulfonierte Sulfonpolymer unter Polysulfon, Polyethersulfon und Polyarylsulfon ausgewählt ist.

17. Verfahren nach Anspruch 15 oder Anspruch 16, bei dem das nichtsulfonierte Sulfonpolymer Polyethersulfon ist.

18. Verfahren nach einem der Ansprüche 15 bis 17, bei dem das sulfonierte Copolymer Polysulfon-, Polyethersulfon- oder Polyarylsulfoneinheiten umfaßt.

19. Verfahren nach einem der Ansprüche 15 bis 18, bei dem das sulfonierte Copolymer Polyethersulfoneinheiten umfaßt.

20. Verfahren nach einem der Ansprüche 15 bis 18, bei dem das sulfonierte Copolymer unter 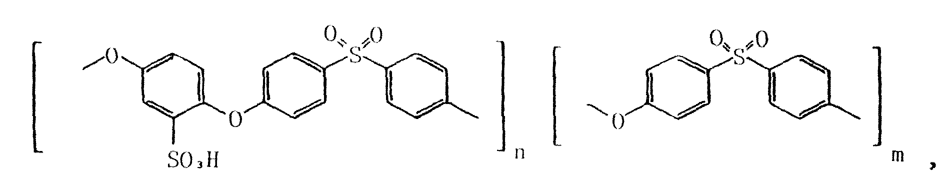 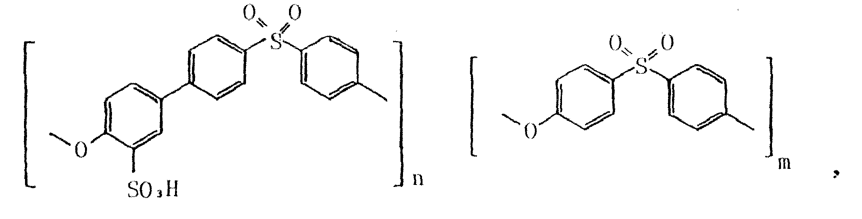 und 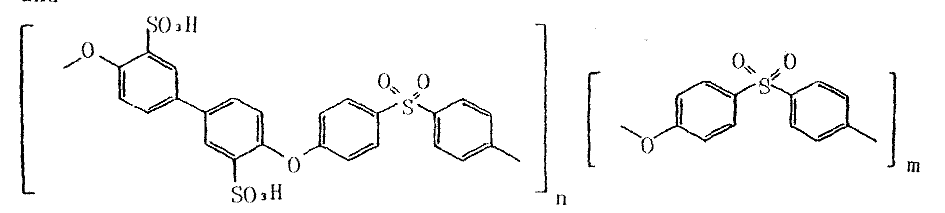 ausgewählt ist.

21. Verfahren nach Anspruch 20, bei dem das Verhältnis von m zu n in den Untereinheiten des Copolymers zwischen 4 und 99 beträgt.

22. Verfahren nach einem der Ansprüche 15 bis 21, bei dem das Nichtlösungsmittel unter Alkoholen, Ethern, oberflächenaktiven Mitteln und Wasser ausgewählt wird.

23. Verfahren nach Anspruch 21, bei dem das Nichtlösungsmittel t-Amylalkohol oder 1-Butanol ist.

24. Verfahren nach einem der Ansprüche 15 bis 21, bei dem das Lösungsmittel N-Methylpyrrolidon ist.

25. Verfahren nach einem der Ansprüche 15 bis 24, bei dem die Membran eine Ultrafiltrationsmembran ist.

26. Verfahren nach Anspruch 25, bei dem die Membran eine Molekulargewichtsausschlußgrenze von 10 kDa hat.

27. Verfahren nach Anspruch 25, bei dem die Membran eine Molekulargewichtsausschlußgrenze von 100 kDa hat.

28. Verfahren nach einem der Ansprüche 15 bis 24, bei dem die Membran ein Mikrofilter ist.

29. Verfahren nach Anspruch 28, bei dem die Membran eine mittlere Fließporengröße von weniger als 0,1 µm hat.

30. Verfahren nach Anspruch 28, bei dem die Membran eine mittlere Fließporengröße von 0,2 µm hat.

31. Verfahren nach Anspruch 28, bei dem die Membran eine mittlere Fließporengröße von 0,3 bis 1,0 µm hat.

32. Verfahren nach einem der Ansprüche 15 bis 31, bei dem das sulfonierte Copolymer 0,4 bis 2 Gew.-% der Gießlösung ausmacht.

33. Verfahren nach einem der Ansprüche 15 bis 32, bei dem das Lösungsmittel 44 bis 81,9 Gew.-% der Gießlösung ausmacht.

34. Verfahren nach einem der Ansprüche 15 bis 33, bei dem das Nichtlösungsmittel 10 bis 30 Gew.-% der Gießlösung ausmacht.

35. Verfahren nach einem der Ansprüche 15 bis 34, bei dem die gasförmige Umgebung Luft aufweist.

36. Verfahren nach einem der Ansprüche 15 bis 35, bei dem die relative Feuchtigkeit der gasförmigen Umgebung 50 bis 60 % beträgt.

37. Verfahren nach einem der Ansprüche 15 bis 36, bei dem die Temperatur des Abschreckbades 22 bis 30°C beträgt.

## Revendications

1. Membrane intégrée totalement hydrophile coulée à partir d'une solution ou d'une suspension comprenant de 8 à 20 % en poids d'un polymère de sulfone non sulfoné, de 0,1 à 6 % en poids d'un copolymère de sulfone sulfoné, un non solvant et un solvant, la membrane comprenant une première surface et une seconde surface, chaque surface portant des pores, la membrane ayant aussi une structure de support poreuse entre les première et seconde surfaces, dans laquelle la structure de support poreuse comprend un réseau réticulé de canaux d'écoulement entre les pores de la première surface et de la seconde surface, dans laquelle la membrane est asymétrique, dans laquelle les pores de la première surface sont au moins 5 fois plus petits que les pores de la seconde surface, et dans laquelle les canaux d'écoulement de la structure de support poreuse présentent un diamètre progressivement croissant depuis la première surface jusqu'à la seconde surface.

2. Membrane selon la revendication 1, dans laquelle le polymère de sulfone non sulfoné est choisi dans le groupe constitué par la polysulfone, la polyéthersulfone et la polyarylsulfone.

3. Membrane selon la revendication 1 ou la revendication 2, dans laquelle le polymère de sulfone non sulfoné est la polyéthersulfone.

4. Membrane selon l'une quelconque des revendications 1 à 3, dans laquelle le copolymère de sulfone sulfoné comprend des motifs de polysulfone, de polyéthersulfone ou de polyarylsulfone.

5. Membrane selon la revendication 4, dans laquelle le copolymère de sulfone sulfoné comprend des motifs de polyéthersulfone.

6. Membrane selon l'une quelconque des revendications 1 à 4, dans laquelle le copolymère de sulfone sulfoné est choisi parmi : 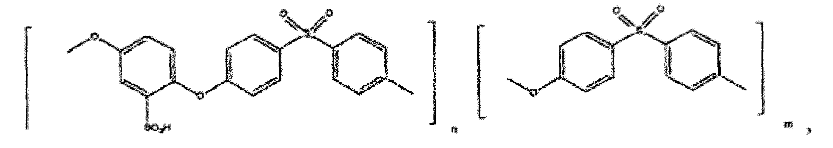 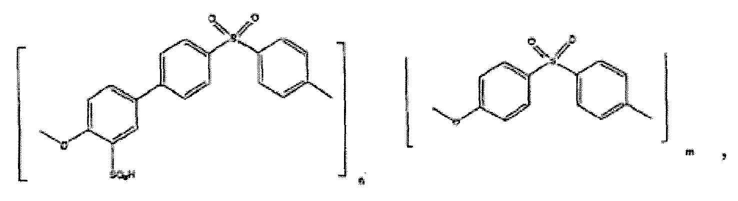 et

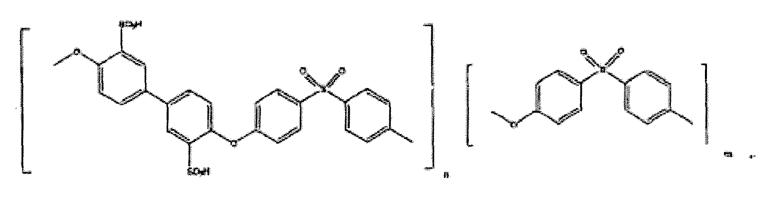

7. Membrane selon la revendication 6, dans laquelle le rapport de m à n dans les sous-motifs du copolymère est compris entre 4 et 99.

8. Membrane selon l'une quelconque des revendications 1 à 7, dans laquelle la membrane est une membrane d'ultrafiltration.

9. Membrane selon la revendication 8, ayant une coupure d'exclusion de masse moléculaire de 10 kDa.

10. Membrane selon la revendication 8, ayant une coupure d'exclusion de masse moléculaire de 100 kDa.

11. Membrane selon l'une quelconque des revendications 1 à 7, dans laquelle la membrane est un microfiltre.

12. Membrane selon la revendication 11, ayant une taille moyenne de pore d'écoulement inférieure à 0,1 µm.

13. Membrane selon la revendication 11, ayant une taille moyenne de pore d'écoulement de 0,2 µm.

14. Membrane selon la revendication 11, ayant une taille moyenne de pore d'écoulement de 0,3 à 1,0 µm.

15. Procédé de formation d'une membrane intégrée hydrophile de façon interne, le procédé comprenant :
la fourniture d'une solution ou d'une suspension de coulée comprenant de 8 à 20 % en poids d'un polymère de sulfone non sulfoné, de 0,1 à 6 % en poids d'un copolymère de sulfone sulfoné, un solvant, et un non solvant ;
dans lequel la solution de coulée est une solution stable limpide homogène ou une dispersion colloïdale stable ;
la coulée de la solution ou de la suspension pour former un film mince ;
l'exposition du film mince à un environnement gazeux ayant une humidité relative de 20 à 100 %, dans lequel le film mince est exposé à l'environnement gazeux pendant une durée allant jusqu'à 30 secondes ;
la coagulation du film dans un bain de trempe à une température de 1 à 60°C ; et
la récupération d'une membrane intégrée hydrophile de façon interne ayant une première surface et une seconde surface, chaque surface portant des pores, la membrane ayant aussi une structure de support poreuse entre les première et seconde surfaces, dans laquelle la structure de support poreuse comprend un réseau de canaux d'écoulement entre les pores de la première surface et de la seconde surface, dans laquelle la membrane est asymétrique, dans laquelle les pores de la première surface sont au moins 5 fois plus petits que les pores de la seconde surface, et dans laquelle les canaux d'écoulement de la structure de support poreuse présentent un diamètre progressivement croissant depuis la première surface jusqu'à la seconde surface.

16. Procédé selon la revendication 15, dans lequel le polymère de sulfone non sulfoné est choisi dans le groupe constitué par la polysulfone, la polyéthersulfone et la polyarylsulfone.

17. Procédé selon la revendication 15 ou la revendication 16, dans lequel le polymère de sulfone non sulfoné est la polyéthersulfone.

18. Procédé selon l'une quelconque des revendications 15 à 17, dans lequel le copolymère sulfoné comprend des motifs de polysulfone, de polyéthersulfone ou de polyarylsulfone.

19. Procédé selon l'une quelconque des revendications 15 à 18, dans lequel le copolymère sulfoné comprend des motifs de polyéthersulfone.

20. Procédé selon l'une quelconque des revendications 15 à 18, dans lequel le copolymère sulfoné est choisi parmi : 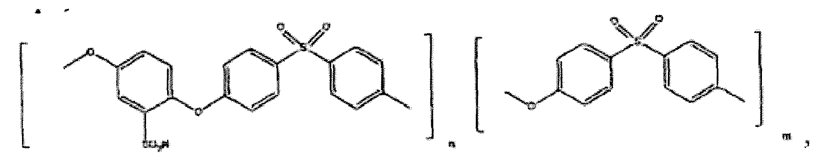 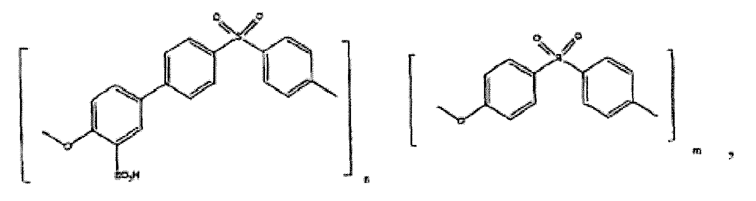 et

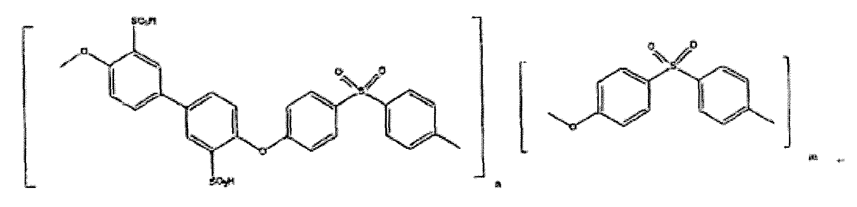

21. Procédé selon la revendication 20, dans lequel le rapport de m à n dans les sous-motifs du copolymère est compris entre 4 et 99.

22. Procédé selon l'une quelconque des revendications 15 à 21, dans lequel le non solvant est choisi parmi les alcools, les éthers, les tensioactifs et l'eau.

23. Procédé selon la revendication 21, dans lequel le non solvant est l'alcool t-amylique ou le 1-butanol.

24. Procédé selon l'une quelconque des revendications 15 à 21, dans lequel le solvant est la N-méthylpyrrolidone.

25. Procédé selon l'une quelconque des revendications 15 à 24, dans lequel la membrane est une membrane d'ultrafiltration.

26. Procédé selon la revendication 25, dans lequel la membrane a une coupure d'exclusion de masse moléculaire de 10 kDa.

27. Procédé selon la revendication 25, dans lequel la membrane a une coupure d'exclusion de masse moléculaire de 100 kDa.

28. Procédé selon l'une quelconque des revendications 15 à 24, dans lequel la membrane est un microfiltre.

29. Procédé selon la revendication 28, dans lequel la membrane a une taille moyenne de pore d'écoulement inférieure à 0,1 µm.

30. Procédé selon la revendication 28, dans lequel la membrane a une taille moyenne de pore d'écoulement de 0,2 µm.

31. Procédé selon la revendication 28, dans lequel la membrane a une taille moyenne de pore d'écoulement de 0,3 à 1,0 µm.

32. Procédé selon l'une quelconque des revendications 15 à 31, dans lequel le copolymère sulfoné constitue de 0,4 à 2 % en poids de la solution de coulée.

33. Procédé selon l'une quelconque des revendications 15 à 32, dans lequel le solvant constitue de 44 à 81,9 % en poids de la solution de coulée.

34. Procédé selon l'une quelconque des revendications 15 à 33, dans lequel le non solvant constitue de 10 à 30 % en poids de la solution de coulée.

35. Procédé selon l'une quelconque des revendications 15 à 34, dans lequel l'environnement gazeux comprend de l'air.

36. Procédé selon l'une quelconque des revendications 15 à 35, dans lequel l'humidité relative de l'environnement gazeux est de 50 à 60 %.

37. Procédé selon l'une quelconque des revendications 15 à 36, dans lequel la température du bain de trempe est de 22 à 30°C.
